# EUROPEAN PATENT SPECIFICATION

(11) **EP 2 789 221 B1**
(45) Date of publication and mention of the grant of the patent: **31.10.2018**
(21) Application number: 14164539.0
(22) Date of filing: 14.04.2014
(51) Int. Cl.: A01D 34/82, A01D 34/90

(54) **Vegetation cutter**
Pflanzenschneider
Coupe de végétation

(30) Priority: 12.04.2013 WO PCT/CN2013/074171
(43) Date of publication of application: 15.10.2014
(73) Proprietor: Techtronic Outdoor Products Technology Limited, Hamilton HM12 (BM)
(72) Inventor: Chung, Koon For, New Territories (HK)
(74) Representative: Stevenson-Hill, Jack Patrick

(56) References cited:
- EP-A1- 1 995 024
- EP-A1- 2 474 218
- US-A1- 2012 246 945
- US-A1- 2014 013 542

## Description

### Background

The current invention reputes to vegetation cutters.

One type of vegetation cutter includes a support shaft having a power source at one end and a tool head at the other end. A handlebar is located part way long the support shaft between the power source and the tool head. Typically the handlebar can be moved between an operational position and a storage position to make the vegetation cutter more compact for storage.

EP 1,995,024 relates to a manually operated work device. According to a machine translation of the abstract of this document, the document discloses a tool having a component e.g. cutting handle, moveably arranged in a holder of the tool. A fixing device is provided for fixing the component at the tool in two positions of the component. The fixing devices threads are provided as right and left threads. The threads are in connection with an actuating device such that the threads are simultaneously actuated. The holder has two accommodating shells, and the actuating device is rotated against the accommodating shells around a rotational axis, which lies in a moveable direction of moveable sections.

### Summary of the Invention

It is desirable that the vegetation cutter cannot be operated when the handlebar is not in the operational position. Accordingly, the present invention provides a handlebar carrier and also a vegetation cutter as set forth in any one of the appended claims.

In a first particular aspect of the invention there is provided a handlebar carrier for a power operated tool, the carrier comprising a carrier body and handlebar clamp attached to the carrier body, the handlebar clamp movably coupling the handlebar to the carrier body, the handlebar moveable between an operational position and a first non-operational position, and a motor kill-switch located on or with the handlebar carrier and operable to prevent operation of the motor when the handlebar is moved out of the operational position.

In a second particular aspect of the invention there is provided a vegetation cutter comprising a support shaft having a first end and a second end, a tool head located at the first end of the support shaft, the tool head carrying a rotatably drivable tool, a motor located at the second end of the support shaft for driving the tool via a drive shaft located in the support shaft, a handlebar located between the tool head and the motor for manipulating the vegetation cutter, a handlebar carrier movably coupling the handlebar to the support shaft, the handlebar moveable via the handlebar carrier between an operational position and a first non-operational position, and a motor kill-switch located on or with the handlebar carrier and operable to prevent operation of the motor when the handlebar is moved out of the operational position.

Preferably, the handlebar is movable via the handlebar carrier about a first axis between the operational position and the first non-operational position, and is movable about a second axis between the operational position and a second non-operational position, the motor kill-switch operable to prevent operation of the motor when the handlebar is moved out of the operational position towards either the first non-operational position or the second non-operational position.

Preferably, the handlebar carrier includes a carrier body and a clamp body having a released position and a clamped position securing the handlebar in the operational position, and wherein the motor kill-switch is operable to prevent operation of the motor when the carrier body and a clamp body are in the released position or when the handlebar is not in the operational position.

Further aspects of the invention will be apparent from the following description and drawings which are given by way of example only.

### Brief Description of the Drawings

The invention will now be described by way of example only with reference to the appended drawings in which:
Figure 1 is a perspective illustration of a vegetation cutter with a handlebar in an operational position,
Figure 2 is a perspective illustration of the vegetation cutter with the handlebar in an intermediate non-operational position,
Figure 3 is a perspective illustration of the vegetation cutter with the handlebar in a non-operational position,
Figure 4 is a side illustration of the vegetation cutter with the handlebar in the non-operational position,

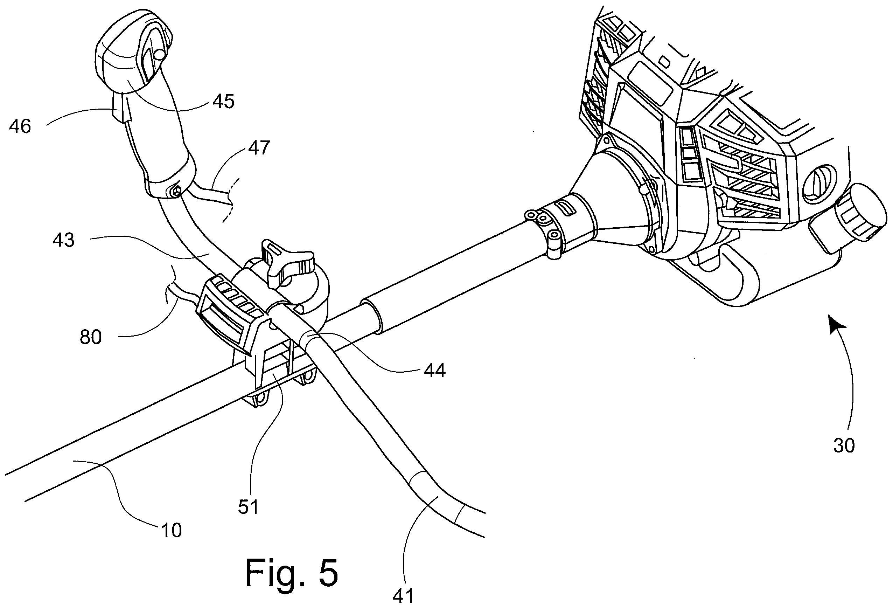

Figure 5 is a perspective illustration of a handlebar carrier mounting the handlebar to the vegetation cutter,

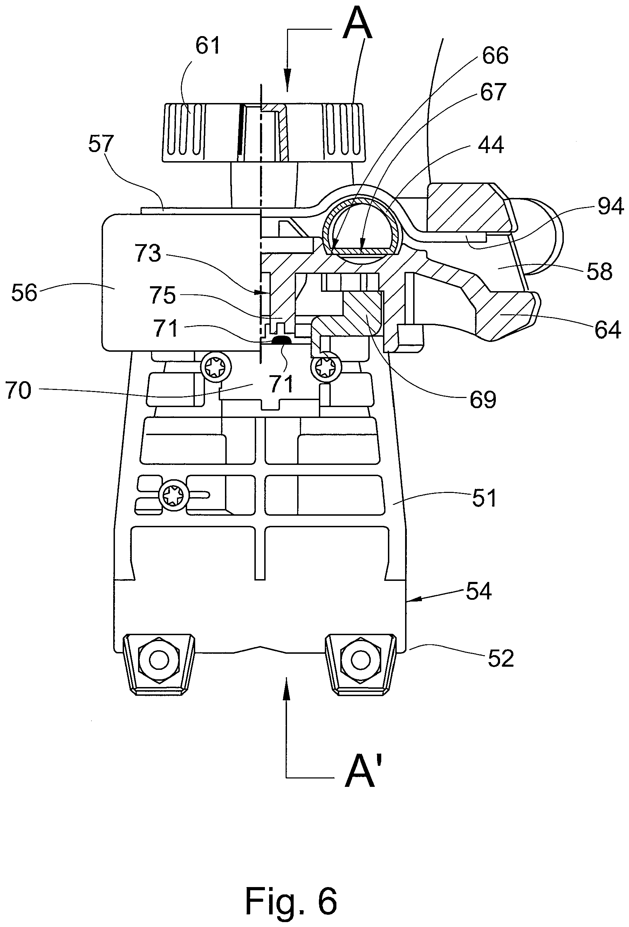

Figure 6 is an end section view through the handlebar carrier,

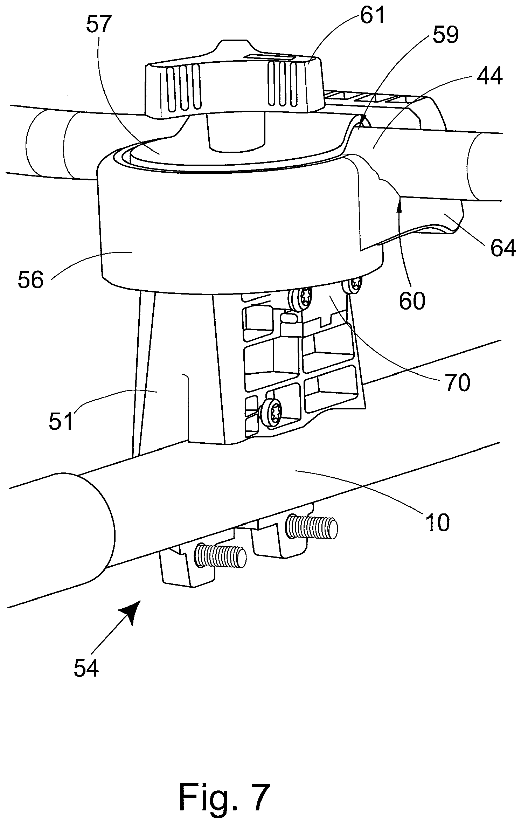

Figure 7 is a perspective section view through the handlebar carrier,

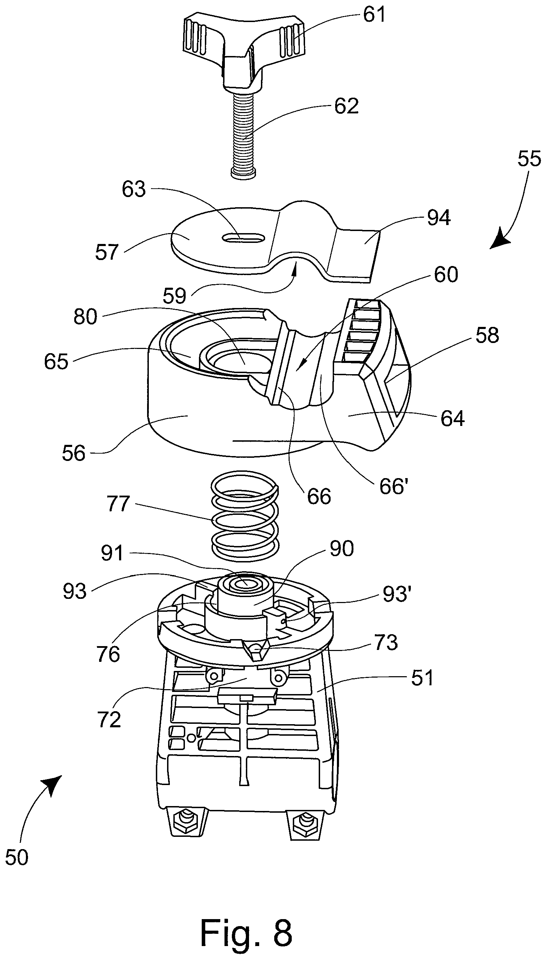

Figure 8 is an exploded view of the handlebar carrier, and

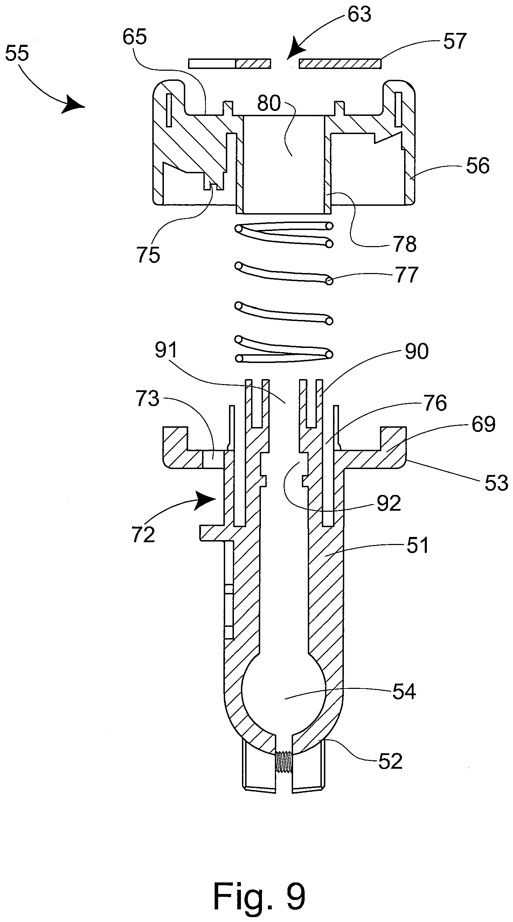

Figure 9 is an exploded section view through the handlebar carrier.

### Description of the Preferred Embodiments

Referring to the drawings there is shown a brush or vegetation cutter. The vegetation cutter comprises a hollow support shaft 10 having a tool head 20 at a first end 11 of the shaft 10 and a power unit 30 at a second end 12 of the shaft 10. A rotational drive shaft (not shown) is located within the hollow support shaft 10 for delivering driving torque from the power unit 30 to the tool head 20. In the preferred embodiment the power unit 30 comprises an internal combustion engine, but in alternative embodiments the power unit 30 could be an electric motor. The power unit 30 is self-contained with a fuel tank or battery, as required, located with a motor and a carburetor or electric motor control means. The tool head 20 comprises an angled drive coupling 21 coupled with the drive shaft and supporting a rotary holder 22 for a cutter 23. In the preferred embodiment the cutter 23 is a cutting blade, but in alternative embodiments may be a cutting line on a line spool. The tool head 20 also comprises a blade guard 24 extending around a portion of the tool head 20, which in use is closest to the operator and shielding the operator from the cutter 23.

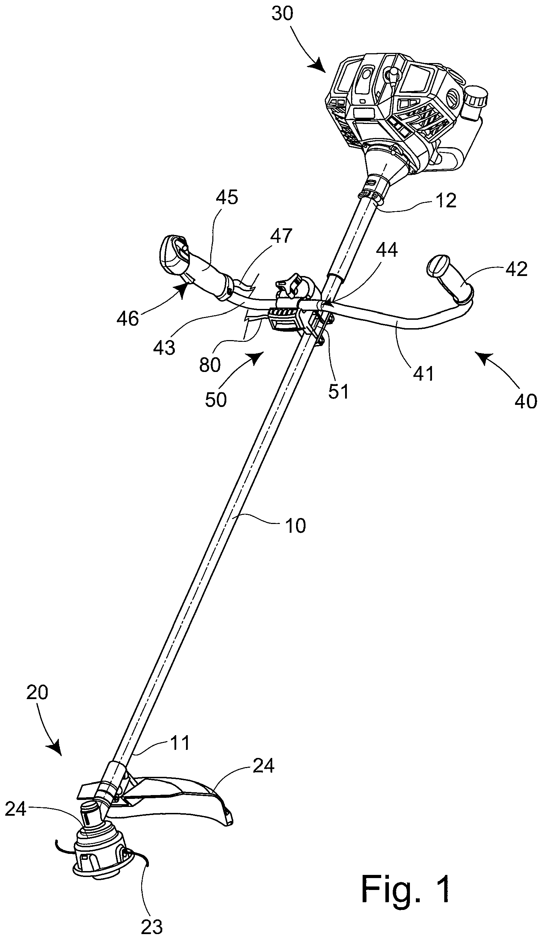

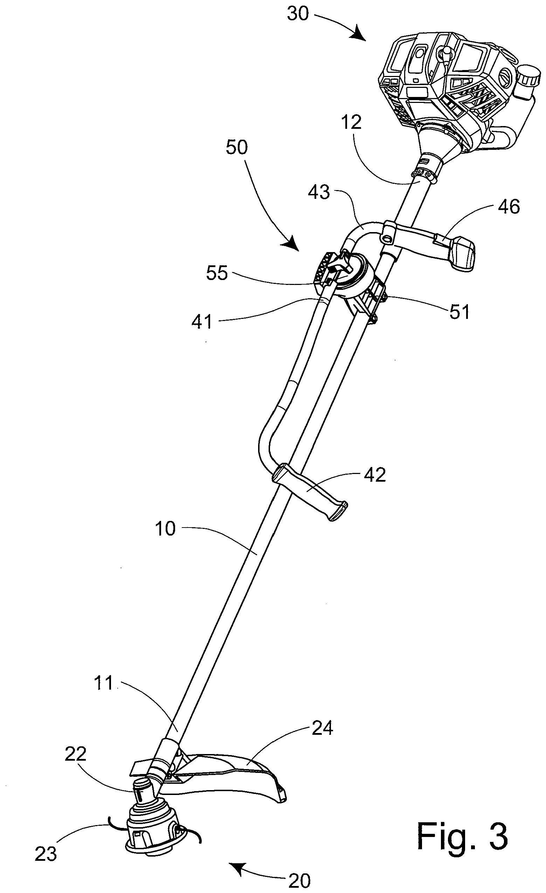

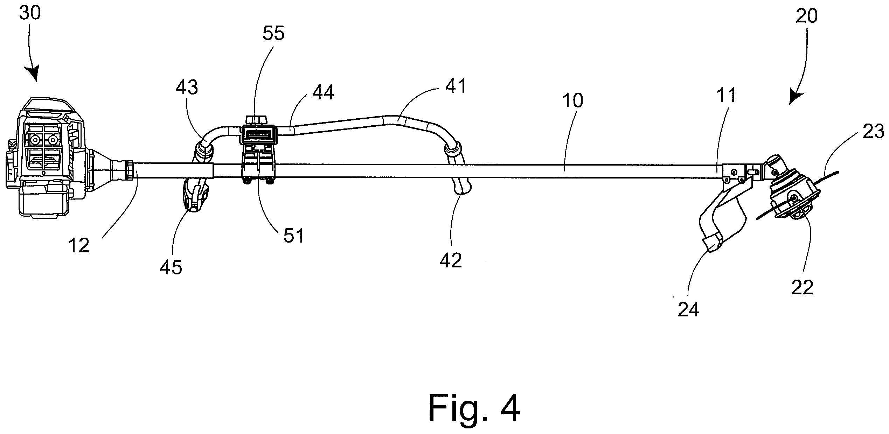

The vegetation cutter also includes a handlebar 40 located intermediate the motor 30 and the tool head 20. The handlebar 40 is attached to the support shaft 10 by a handlebar carrier 50 that allows the handlebar 40 to be moved from an operational position, for example as shown in Figure 1, in which a user can hold the handlebar 40 to support the vegetation cutter in use and a non-operational or stored position, for example as shown in Figure 3 and Figure 4. The handlebar 40 comprises a substantially elongate centre section 41 with bent ends section 42, 43 at either end of the centre section 41. The bent ends 42, 43 form handgrips of the handlebar 40 for holding by a user with respective hands in the manner of, for example, holding a bicycle handlebar. The handlebar 40 is attached to the support shaft 10 by way of the handlebar carrier 50 at or near the center 44 of the centre portion 41 of the handlebar and in the 'in use' position the bent handgrip end portions 42, 43 extend substantially upwardly. On at least one of the handgrip portions 43 is a control means 45 for the power unit 30. In the preferred embodiment the control means 45 is a trigger 46 which can be operated by a finger of the tool operator in order to control ON, OFF and in some embodiments speed functions of the power unit 30. A control cable 47 (only partly shown) extends from the control means 45 back to the power unit 30 to relay a control signal from the trigger 46 to the power unit 30. In the preferred embodiment the control cable 47 is a throttle cable for moving for example a butterfly valve on a carburetor, or in an alternative embodiment the control cable 47 may be an electric cable transmitting an electric control signal to an electric motor controller.

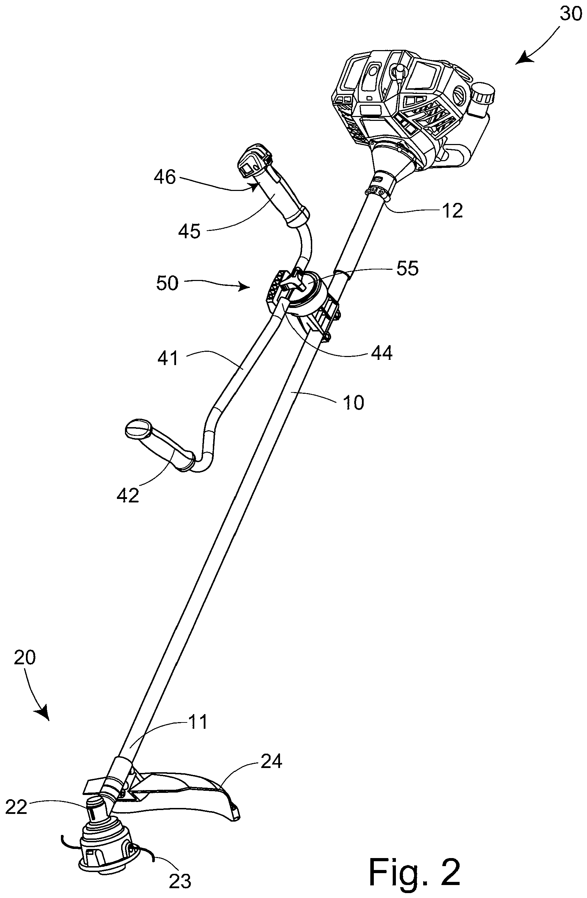

The handlebar carrier 50 couples the handlebar 40 to the support shaft 10 and allows the handlebar 40 to be moved between the operational position and the non-operational position. The handlebar carrier 50 locks the handlebar 40 in the operational position or when the handlebar carrier 50 is released the handlebar 40 can be rotated about a first axis to an intermediate non-operational position as illustrated in Figure 2, and also the about second axis from the intermediate non-operational position to the non-operational position such the handlebar 40 is in the stored position as shown in Figures 3 and 4. In the preferred embodiment the first axis is orthogonal to a longitudinal axis of the support shaft 10 such that in the intermediate non-operational position the handlebar 40 is parallel with the support shaft 10. Correspondingly in such an embodiment the second axis is orthogonal to the first axis and parallel with the longitudinal axis of the support shaft 10. The handlebar carrier 50 comprises a carrier body 51 having a circular pipe clamp 54 arranged at its first end 52 for clamping the handlebar carrier 50 at a position along the support shaft 10. The pipe clamp 54 maybe releasable for allowing the position of the handlebar carrier 50 to be changed along the length of the support shaft 10, but in normal circumstances the position of the handlebar carrier 50 on the support shaft 10 would not need to be regularly adjusted by a tool operator. The body 51 of the handlebar carrier 50 extends upwardly and away from the support shaft 10 when the vegetation cutter is held in the in-use position. The second end 53 of the carrier body has a circular flange member 69 for cooperating with a handlebar clamp 55. Coaxial with the carrier body 51 is a circular recess channel 76 surrounding a central column 90. A coaxial bore 91 in the column 90 has located therein a fixing nut 92. A helical spring 78 is sized to locate within the recess channel 76 of the carrier body 51.

A handlebar clamp 55 for co-operating with the flange 69 end of the carrier body 51 comprises a clamp body portion 56 and a clamping plate 57. The clamp body 56 has an outer skirt for cooperating with flange 69 of the carrier body 51 and an inner skirt which extends downwardly and, in situ, into the circular channel 76 of the carrier body 51 when the clamp body 56 and carrier body 51 are brought into co-operating engagement. The skirt 78 captures the spring 77 within channel 76 of the carrier body 51. The column 90 of the carrier body extends through an internal bore 80 of the handlebar clamp body 56. The walls of the bore 80 form the downwardly extending skirt 78. When in the co-operating engagement the clamp body 56 is rotationally moveable with respect to the carrier body 51. The flange 69 of the carrier body 51 has to radially extending taps 93. A downwardly extending finger 75 of the clamp body 56 engages with the taps 93 of the flange at respective rotational orientations of the clamp body 56. The range of rotational movement of the clamp body 56 with respect to the carrier body 51 is limited by said taps 93 and finger 75.

The generally circular clamp body 56 has a tail portion 64 within which is located an elongate slot 58. The upper surface of the clamp body 56 has a recess area 65. A clamping plate 57 has a tail tap 94 which engages within the slot 58 of the tail portion 64 of the body 56. The clamping plate 57 then locates within the recess 65 on top of the clamp body 56. The clamp body 56 and clamping plate 57 has complimentary semi-circular handlebar clamping channels 59, 60 which are located to one side of the central bore 80 and between the bore 80 and the tail portion 64 of the body 56. The centre portion 41 of the handlebar is received within the complimentary channels 59, 60 for clamping the handlebar portion 41 between the clamp body 56 and clamping plate 57. The clamp body 56 and clamping plate 57 are held together and the handlebar clamp 55 secured to the carrier body 51 by a clamping bolt 61 having a threaded shank 62 engageable with the fixing nut 92 held within the carrier body 51. The clamp body 56, clamping plate 57 and carrier body 51 have respective corresponding central apertures 63, 80, 91 for receiving the threaded shank 62 passing though the apertures 63, 80, 91. The clamping bolt 61 is threadedly engaged with the fixing nut 92 and clamps the clamp body 56 and clamping plate 57 together and to the carrier body 51 by turning the bolt 61 to move the threaded shank 62 along the nut 92 towards the carrier body 51. The handlebar clamp 55 is released by releasing the bolt 61 from the nut 92. When the bolt 61 is released the clamp body 56 may be rotated about the bolt 61 with respect to the carrier body 51, and at the same time, rotating the handlebar 40 about the first axis between the operational position and the intermediate non-operational position, that is to say from the position shown in Figure 1 to the position shown in Figure 2. In the unclamped condition the centre portion 41 of the handlebar 40 can also rotate within the complimentary recess 59, 60 of the clamshell clamp portions so that the handlebar can be rotated about the second axis from the intermediate non-operational position to the non-operational position, that is to say from the position shown in Figure 2 to the position shown in Figures 3 and 4.

The semi-circular handlebar clamping recess 60 of the clamp body 56 has flattened shoulder surface 66. The center 44 of the handlebar has a flat profile 67 along one side. The flat profile 67 cooperates with the flatten shoulder 66 of the recess 60 in order to index the handlebar about the second axis in its intended operational position. In additional, in the operational position shown in Figure 1, the finger 75 of the clamp body 56 engages a first one of the taps 93 on the flange of the carrier body 51. When the clamp body 56 is rotated through 90-degrees to the intermediate operational position the finger 75 engages the second one of the taps 93. Thus, the finger 75 and taps 93 index the handlebar between the operational position and the intermediate non-operational position. The flat profile 67 in cooperation with the flatten shoulders 66 in the recess 60 index the handlebar between the intermediate in operational position and a stored position.

In order that the power source 30, being either an internal combustion engine or an electric motor, cannot operate when the handle is not in the operational position, a kill-switch 70is provided with the handlebar carrier 50. Wires 80 connect the kill-switch 70 with the control means 45 or the power source 30 control as required by its operation means. The kill-switch 70 can be a normally open or normally close switch circuit, depending on the power source operational requirements. For example, when an internal combustion engine is used in the preferred embodiment the kill-switch might be wired as normally closed contact that grounds the coil of the engine thus preventing ignition spark and killing the engine. When the handle is moved to the operational position the kill-switch contacts are opened such that the coil is no longer grounded and a spark can be produced to operate the engine. If an electric motor is used in an alternative embodiment the kill-switch could be wired in series with the control means 45 such that unless the kill switch is closed the trigger cannot cause operation of the motor. Alternatively the kill switch could be wired as normally open or normally closed contacts that send a kill signal to the electric motor controller. In the preferred embodiment, the kill-switch 70 is a "micro-switch" of a suitable and known type that is located within a recess 72 of the carrier body 51 immediately below the flange 69. An opening or aperture 73 is provided in the flange adjacent the recess 72. Referring to the drawings it can be seen to the micro-switch has a switch button 71 that when depressed causes the switch contacts to change states, for example from a close state to an open state or from an open state to a close state as necessary for the particular kill-switch arrangement of the power source 30. The kill-switch is located within complimentary recess 72 with the button 71 adjacent and engageable through opening or aperture 73 is provided in the flange. When the clamp body 56 and carrier body 51 are rotationally aligned in the operational position the finger 75 of the clamp body 56 is aligned with the opening or aperture 73 is provided in the flange. The clamp body 56 and carrier body 51 are biased apart by the spring 77 in recess 76. When the bolt 61 is engaged to clamp the handlebar the clamp body 56 and carrier body 51 are moved together against the spring bias. The finger 75 is moved to project through opening or aperture 73 and at the same time to depress the micro-switch button 71 in order to change the state of the micro-switch contacts and enable operational of the power source 30. At the same time the handlebar is clamped between the clamp body 56 and clamping plate 57.

Thus, the handlebar clamp 55 is provided with a kill-switch 70 that has a button 71 for enabling the power source 30 of the vegetation cutter only when the handlebar 40 is in the operational position. If the clamping bolt 61 is not tightened to secure of the handlebar clamp 55, the kill-switch button 71 is not depressed and the power source 30 is not enabled. If the handlebar is rotated about the first axis away from the operational position to the intermediate non-operational position, the finger 75 is not aligned with opening or aperture 73 and the kill-switch button 71 cannot be depressed to enable the power source, even when the clamp 55 is properly closed. Thus, the power source 30 of the vegetation cutter can only operate when the handlebar carrier 50 is correctly secured to the support shaft 10 and the handlebar 40 is correctly in the operational position, and the clamshell clamp 55 of the handlebar carrier clamping the handlebar 40 is correctly closed and clamped.

## Claims

1. A handlebar carrier (50) for coupling a handlebar (40) to a support shaft (10) of a power-operated-tool, the handlebar carrier (50) comprising a carrier body (51) and handlebar clamp (55) attached to the carrier body (51), the handlebar clamp (55) movably coupling the handlebar (40) to the carrier body (51), the handlebar (40) moveable between an operational position and a first non-operational position,
**characterised in that** the handlebar carrier (50) includes a motor kill-switch (70) operable to prevent operation of the motor (30) when the handlebar (40) is moved out of the operational position.

2. The handlebar carrier (50) of claim 1 wherein the handlebar (40) is movable via the handlebar clamp (55) about a first axis between the operational position and the first non-operational position, and is movable about a second axis between the operational position and a second non-operational position, the motor kill-switch (70) operable to prevent operation of the motor (30) when the handlebar (40) is moved out of the operational position towards either the first non-operational position or the second non-operational position.

3. The handlebar carrier (50) of claim 1 or claim 2 wherein the carrier body (51) and handlebar clamp (55) having a released position and a clamped position securing the handlebar (40) in the operational position, and wherein the motor kill-switch (70) is operable to prevent operation of the motor (30) when the carrier body (51) and handlebar clamp (55) are in the released position or when the handlebar (40) is not in the operational position.

4. A vegetation cutter comprising:
a support shaft (10) having a first end and a second end,
a tool head (20) located at the first end of the support shaft (10), the tool head (20) carrying a rotatably drivable tool,
a motor (30) located at the second end of the support shaft (10) for driving the tool via a drive shaft located in the support shaft (10),
a handlebar (40) located between the tool head (20) and the motor (30) for manipulating the vegetation cutter,
a handlebar carrier (50) movably coupling the handlebar (40) to the support shaft (10), the handlebar (40) moveable via the handlebar carrier (50) between an operational position and a first non-operational position,
**characterised in that** the handlebar carrier (50) includes a motor kill-switch (70) operable to prevent operation of the motor (30) when the handlebar (40) is moved out of the operational position.

5. The vegetation cutter of claim 4 wherein the handlebar (40) is movable via the handlebar carrier (50) about a first axis between the operational position and the first non-operational position, and is movable about a second axis between the operational position and a second non-operational position, the motor kill-switch (70) operable to prevent operation of the motor (30) when the handlebar (40) is moved out of the operational position towards either the first non-operational position or the second non-operational position.

6. The vegetation cutter of claim 4 or 5 wherein the handlebar carrier (50) includes a carrier body (51) and a handlebar clamp (55) having a released position and a clamped position securing the handlebar (40) in the operational position, and wherein the motor kill-switch (70) is operable to prevent operation of the motor (30) when the carrier body (51) and the handlebar clamp (55) are in the released position or when the handlebar (40) is not in the operational position.

## Patentansprüche

1. Lenkstangenträger (50) zum Koppeln eines Lenkers (40) an einem Halterungsschaft (10) eines Elektrowerkzeugs, wobei der Lenkstangenträger (50) einen Trägerkörper (51) und einen am Trägerkörper (51) befestigten Lenkstangenspanner (55) beinhaltet, wobei der Lenkstangenspanner (55) die Lenkstange (40) am Trägerkörper (51) beweglich koppelt, wobei die Lenkstange (40) zwischen einer Betriebsposition und einer ersten Nichtbetriebsposition beweglich ist,
**dadurch gekennzeichnet, dass** der Lenkstangenträger (50) einen Motor-Aus-Schalter (70) beinhaltet, welcher zum Verhindern von Betrieb des Motors (30) bedienbar ist, wenn die Lenkstange (40) aus der Betriebsposition heraus bewegt wird.

2. Lenkstangenträger (50) nach Anspruch 1, bei welchem die Lenkstange (40) über den Lenkstangenspanner (55) um eine erste Achse zwischen der Betriebsposition und der ersten Nichtbetriebsposition beweglich ist, und um eine zweite Achse zwischen der Betriebsposition und einer zweiten Nichtbetriebsposition beweglich ist, wobei der Motor-Aus-Schalter (70) zum Verhindern von Betrieb des Motors (30) bedienbar ist, wenn die Lenkstange (40) aus der Betriebsposition heraus entweder in die erste Nichtbetriebsposition oder in die zweite Nichtbetriebsposition bewegt wird.

3. Lenkstangenträger (50) nach Anspruch 1 oder 2, bei welchem der Trägerkörper (51) und der Lenkstangenspanner (55) eine gelöste Position und eine gespannte Position besitzen, welche die Lenkstange (40) in der Betriebsposition sichert, und wobei der Motor-Aus-Schalter (70) zum Verhindern von Betrieb des Motors (30) bedienbar ist, wenn der Trägerkörper (51) und der Lenkstangenspanner (55) in der gelösten Position sind, oder wenn die Lenkstange (40) nicht in der Betriebsposition ist.

4. Pflanzenschneider, Folgendes beinhaltend:
einen Halterungsschaft (10), welcher ein erstes Ende und ein zweites Ende besitzt,
einen Werkzeugkopf (20), befindlich am ersten Ende des Halterungsschafts (10), wobei der Werkzeugkopf (20) ein drehend antreibbares Werkzeug trägt,
einen Motor (30), befindlich am zweiten Ende des Halterungsschafts (10) zum Antreiben des Werkzeugs über einen Antriebsschaft, welcher im Halterungsschaft (10) befindlich ist,
eine Lenkstange (40), befindlich zwischen dem Werkzeugkopf (20) und dem Motor (30) zum Handhaben des Pflanzenschneiders,
einen Lenkstangenträger (50), welcher die Lenkstange (40) beweglich am Halterungsschaft (10) koppelt, wobei die Lenkstange (40) über den Lenkstangenträger (50) zwischen einer Betriebsposition und einer ersten Nichtbetriebsposition beweglich ist,
**dadurch gekennzeichnet, dass** der Lenkstangenträger (50) einen Motor-Aus-Schalter (70) beinhaltet, welcher zum Verhindern von Betrieb des Motors (30) bedienbar ist, wenn die Lenkstange (40) aus der Betriebsposition heraus bewegt wird.

5. Pflanzenschneider nach Anspruch 4, bei welchem die Lenkstange (40) über den Lenkstangenträger (50) um eine erste Achse zwischen der Betriebsposition und der ersten Nichtbetriebsposition beweglich ist, und um eine zweite Achse zwischen der Betriebsposition und einer zweiten Nichtbetriebsposition beweglich ist, wobei der Motor-Aus-Schalter (70) zum Verhindern von Betrieb des Motors (30) bedienbar ist, wenn die Lenkstange (40) aus der Betriebsposition heraus entweder in die erste Nichtbetriebsposition oder in die zweite Nichtbetriebsposition bewegt wird.

6. Pflanzenschneider nach Anspruch 4 oder 5, bei welchem der Lenkstangenträger (50) einen Trägerkörper (51) und einen Lenkstangenspanner (55) beinhaltet, welche eine gelöste Position und eine gespannte Position besitzen, welche die Lenkstange (40) in der Betriebsposition sichert, und wobei der Motor-Aus-Schalter (70) zum Verhindern von Betrieb des Motors (30) bedienbar ist, wenn der Trägerkörper (51) und der Lenkstangenspanner (55) in der gelösten Position sind, oder wenn die Lenkstange (40) nicht in der Betriebsposition ist.

## Revendications

1. Support de guidon (50) pour accoupler un guidon (40) à un arbre de support (10) d'un outil motorisé, le support de guidon (50) comprenant un corps de support (51) et une pince de guidon (55) fixée sur le corps de support (51), la pince de guidon (55) accouplant de manière mobile le guidon (40) au corps de support (51), le guidon (40) pouvant être déplacé entre une position opérationnelle et une première position non opérationnelle ;
**caractérisé en ce que** le support de guidon (50) inclut un interrupteur d'arrêt du moteur (70) servant à empêcher le fonctionnement du moteur (30) lorsque le guidon (40) est déplacé hors de la position opérationnelle.

2. Support de guidon (50) selon la revendication 1, dans lequel le guidon (40) peut être déplacé par l'intermédiaire de la pince de guidon (55) autour d'un premier axe entre la position opérationnelle et la première position non opérationnelle et peut être déplacé autour d'un deuxième axe entre la position opérationnelle et une deuxième position non opérationnelle, l'interrupteur d'arrêt du moteur (70) servant à empêcher le fonctionnement du moteur (30) lorsque le guidon (40) est déplacé hors de la position opérationnelle vers la première position non opérationnelle ou la deuxième position non opérationnelle.

3. Support de guidon (50) selon les revendications 1 ou 2, dans lequel le corps de support (51) et la pince du guidon (55) comportant une position dégagée et une position serrée fixant le guidon (40) dans la position opérationnelle, et dans lequel l'interrupteur d'arrêt du moteur (70) sert à empêcher le fonctionnement du moteur (30) lorsque le corps de support (51) et la pince du guidon (55) se trouvent dans la position dégagée ou lorsque le guidon (40) ne se trouve pas dans la position opérationnelle.

4. Dispositif de coupe de végétation, comprenant :
un arbre de support (10) comportant une première extrémité et une deuxième extrémité ;
une tête d'outil (20) agencée au niveau de la première extrémité de l'arbre de support (10), la tête d'outil (20) supportant un outil pouvant être entraîné de manière rotative ;
un moteur (30) agencé au niveau de la deuxième extrémité de l'arbre de support (10) pour entraîner l'outil par l'intermédiaire d'un arbre d'entraînement agencé dans l'arbre de support (10) ;
un guidon (40) agencé entre la tête d'outil (20) et le moteur (30) pour manipuler le dispositif de coupe de végétation ;
un support de guidon (50) accouplant de manière mobile le guidon (40) à l'arbre de support (10), le guidon pouvant être déplacé par l'intermédiaire du support de guidon (50) entre une position opérationnelle et une première position non opérationnelle ;
**caractérisé en ce que** le support de guidon (50) inclut un interrupteur d'arrêt du moteur (70) servant à empêcher le fonctionnement du moteur (30) lorsque le guidon (40) est déplacé hors de la position opérationnelle.

5. Dispositif de coupe de végétation selon la revendication 4, dans lequel le guidon (40) peut être déplacé par l'intermédiaire du support de guidon (50) autour d'un premier axe entre la position opérationnelle et la première position non opérationnelle, et peut être déplacé autour d'un deuxième axe entre la position opérationnelle et une deuxième position non opérationnelle, l'interrupteur d'arrêt du moteur (70) servant à empêcher le fonctionnement du moteur (30) lorsque le guidon (40) est déplacé hors de la position opérationnelle vers la première position non opérationnelle ou la deuxième position non opérationnelle.

6. Dispositif de coupe de végétation selon les revendications 4 ou 5, dans lequel le support de guidon (50) inclut un corps de support (51) et une pince de guidon (55) comportant une position dégagée et une position serrée, fixant le guidon (40) dans la position opérationnelle, et dans lequel l'interrupteur d'arrêt du moteur (70) sert à empêcher le fonctionnement du moteur (30) lorsque le corps de support (51) et la pince du guidon (55) se trouvent dans la position dégagée ou lorsque le guidon (40) ne se trouve pas dans la position opérationnelle.
